Europäisches Patentamt

(19) European Patent Office

Office européen des brevets

(11) Publication number: **0 265 241**
B1

# EUROPEAN PATENT SPECIFICATION

(45) Date of publication of the patent specification:
19.12.90

(51) Int. Cl.⁵: **B23K 31/00**

(21) Application number: 87309303.3

(22) Date of filing: 21.10.87

(54) Blowhole pit preventing agent and arc-welding method using the same.

(30) Priority: 24.10.86 JP 254433/86
23.03.87 JP 68574/87

(43) Date of publication of application:
27.04.88 Bulletin 88/17

(45) Publication of the grant of the patent:
19.12.90 Bulletin 90/51

(84) Designated Contracting States:
BE DE FR GB IT NL SE

(56) References cited:
US-A- 3 102 190
US-A- 4 444 353

(73) Proprietor: KAWASAKI STEEL CORPORATION, 1-28, Kitahonmachi-dori 1-Chome, Chuo-Ku, Kobe-Shi Hyogo-Ken(JP)

(72) Inventor: Yasuda, Koichi Technical Research Division, Kawasaki Steel Corporation, 1 Kawasaki-Cho, Chiba City Chiba Pref.(JP)
Inventor: Nakano, Shosaburo Technical Research Division, Kawasaki Steel Corporation, 1 Kawasaki-Cho, Chiba City Chiba Pref.(JP)
Inventor: Nishiyama, Noboru Technical Research Division, Kawasaki Steel Corporation, 1 Kawasaki-Cho, Chiba City Chiba Pref.(JP)
Inventor: Matsumoto, Takaro c/o Mizushima Works, Kawasaki Steel Corp Mizushima-Kawasaki-Dori 1-Ch, Kurashiki City Okayama Pref.(JP)
Inventor: Nakatsuki, Katsuaki c/o Mizushima Works, Kawasaki Steel Corp Mizushima-Kawasaki-Dori 1-Ch, Kurashiki City Okayama Pref.(JP)
Inventor: Komatsu, Tadao B-307, Koseinenkin-Jutaku, 52, Ohtsukadai 4-Chome Nishi-Ku, Kobe City Hyogo Pref.(JP)
Inventor: Nakajima, Tadashi, 1-29, Minamimikunigaoka-Cho 3-Chome, Sakai City Osaka-Fu(JP)

(74) Representative: Overbury, Richard Douglas et al, HASELTINE LAKE & CO Hazlitt House 28 Southampton Buildings Chancery Lane, London WC2A 1AT(GB)

## Description

This invention relates to an arc-welding method using a blowhole or pit preventing agent, and more particularly to an effective means for preventing the occurrence of blowhole or pit formation which constitutes a serious defect in the arc-welding of galvanised sheets.

In general, surface treated materials obtained by applying zinc or zinc alloy or a composition containing them to a surface of a metallic substrate to form a plated film or coated film are called galvanised sheets and include zinc-plated steel sheets. When the treated surfaces of the galvanised sheets are lapped one upon the other to form a lap joint by welding, zinc or the like is vaporized by the welding heat to produce a high vapor pressure of zinc at the joint face whereby blowhole or pits are frequently produced in the weld bead. This has been a serious problem up to the present, and consequently it has not been possible to arc weld galvanised sheets in situations requiring high quality welded joints, for example, where high-strength members and the like are involved.

Thus, prior to welding, the zinc or the like in the vicinity of the portion to be welded has hitherto had to be removed by a mechanical means, or by vaporization by a gas burner or an ahead torch, or by a chemical means such as a chemical remover or the like.

In this case, not only is the number of steps undesirably increased but also zinc or the like present in portions other than the portion to be welded is unnecessarily removed or a portion near to the portion to be welded is damaged so that the rust preventing ability and the appearance of the base metal are deleteriously affected.

Also, since chemical removers contain a large amount of organic solvent, acid, alkali or the like, the use of such a remover unfavourably damages the working environment and safety.

It is, therefore, an object of the present invention to prevent the occurrence of blowhole or pit formation during arc-welding of galvanised sheet without the aforementioned drawbacks of the conventional techniques.

It is another object of the present invention to provide a blowhole or pit preventing agent which can effectively suppress the occurrence of blowholes or pits even when zinc or the like is present in a portion to be welded and to provide an arc-welding method for galvanized sheet by using the blowhole or pit preventing agent which can be carried out under a high welding efficiency.

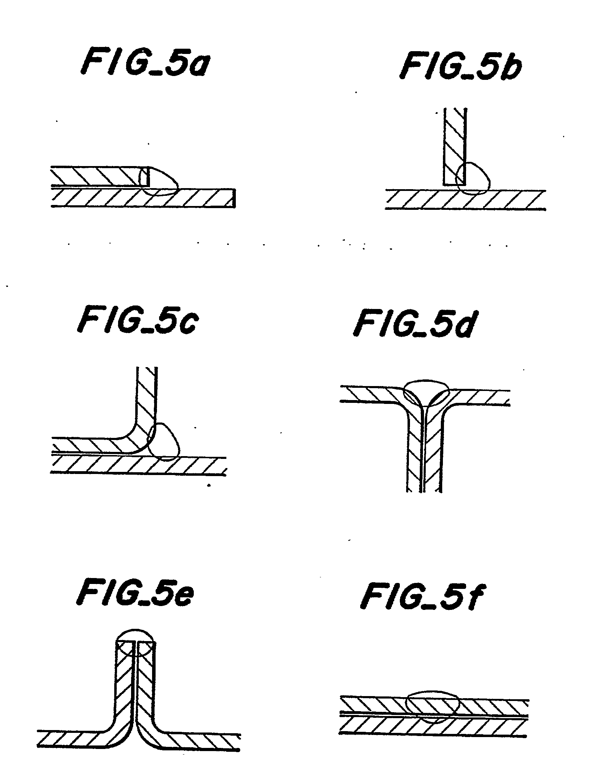

The term "lap joint welding" used herein includes fillet welding, T-shape or cruciform joint welding, flare welding, edge welding, spot welding, seam welding and the like as shown in Fig. 5 of the accompanying drawings.

According to the present invention there is provided a method of lap joint arc-welding a galvanized sheet which comprises applying a blowhole or pit preventing agent to at least one of the lapped surfaces to be welded and then performing arc-welding, said agent comprising at least one phosphorus compound of the general formula $M_xP_y$, wherein M is an element selected from the group consisting of Fe, Ni, Cu, Cr, Mo, Mn, Si and $A\ell$, and x and y are each integers, and being applied in an amount such that said phosphorus compound is present in an amount of from 10 to 1000g/m². 

For better understanding of the invention and to show how the same may be carried into effect, reference will now be made, by way of example, to the accompanying drawings, in which:

Fig. 1 is a schematic view illustrating arcwelding of a lap joint;

Figs. 2 and 3 are graphs showing the relationship between the application range of ferrophosphorus and the ratio of blowholes generated;

Fig. 4 is a schematic view defining the application range of ferrophosphorus; and

Figs. 5a to 5f are partial section views of various embodiments of welding methods in accordance with the present invention.

The inventors have made various experiments using elemental phosphorus and phosphorus compounds as blowhole or pit preventing agents and found that at least one phosphorus compound of the general formula $M_xP_y$ (M is an element selected from Fe, Ni, Cu, Cr, Mo, Mn, Si and $A\ell$ , and x and y are integers) such as ferrophosphorus, nickel phosphoride, copper phosphoride, chromium phosphoride, molybdenum phosphoride, manganese phosphoride, silicon phosphoride and aluminium phosphoride is effective for preventing the occurrence of blowholes or pits. Among these phosphorus compounds, the use of ferrophosphorus is preferable in view of economic reasons, safety in the atmosphere and the like. The ferrophosphorus may be represented by at least one of the chemical formulae $FeP$, $Fe_2P$, $Fe_3P$ and $FEP_2$ and may have a phosphorus content of 15–55% by weight.

According to the invention, the blowhole or pit preventing agent preferably consists of 5–70% by weight of ferrophosphorus and 0.1–20% by weight of at least one additive with the balance being a solvent.

When the prevention agent is supplied to a weld line on the galvanized sheet prior to welding in accordance with the invention, it may be spread in the form of powder. Alternatively, a suspension of the agent may be sprayed by means of a spray gun or adhered to the weld line with a brush. If necessary, a suitable additive such as water, solvent, adhesive, dispersant or the like may be included in the prevention agent. As the adhesive, a substance forming an inorganic continuous coating on drying, such as ethyl silicate, organic titanate or the like is particularly effective because such substances do not produce gas.

In accordance with the invention, the blowhole or pit preventing agent comprising the phosphorus compound as the effective ingredient is adhered to a region of at least one surface of the base metal adjacent to the position where the weld bead is to be formed, i.e. to a region of the surfaces of the base metal to be lapped with each other adjacent to the weld bead or to a region of a surface forming voids capable of oppressing the weld bead with a high vapor pressure of zinc vaporized by the welding heat during formation of the weld bead, prior to the arc-welding.

During the arc-welding of the galvanized sheet, the zinc present in the surface layer of the base metal to be welded has a melting point of about 419.5°C and a boiling point of about 906°C, which are rather lower than those of carbon steel. Thus when the base metal is heated to a temperature above the melting point of zinc by the welding heat, zinc in the heated region is fused and finally vaporized into a vapor.

When lap joint welding, however, the resulting zinc vapor can not easily escape from gaps in the joint faces to the outside, so that when the zinc vapor is discharged through the molten pool formed by welding to the outside with the increase in vapor pressure, some of the zinc bubbles are caught in the weld metal or in the neighbouring surface depending upon the time interval between the discharge of the zinc vapor and the solidification of the molten pool, resulting in the occurrence of blowholes or pits. The inventors have made studies with respect to the mechanism of generating blowholes or pits and have found that when the phosphorus compound is previously adhered to the region forming a source for the formation of high pressure zinc vapor in gaps as mentioned above prior to the welding, the occurrence of blowholes or pits is prevented in the subsequent welding step.

In the method of the invention, the phosphorus compound reacts with zinc and molten iron under the welding heat to form a three-component compound of phosphorus-zinc-iron having melting and boiling points higher than those of zinc, so that the occurrence of blowholes or pits resulting from the vaporization of zinc can be prevented by the above compound.

When ferrophosphorus is used as the phosphorus compound, if the P content is less than 15% by weight, there is a reduced tendency for the three-component compound to be formed and the effect on the prevention of blowholes or pits is weak, while if it exceeds 55% by weight, it is difficult to synthesize the ferrophosphorus. Therefore, ferrophosphorus having a P content of 15–55% by weight is preferably used as the phosphorus compound.

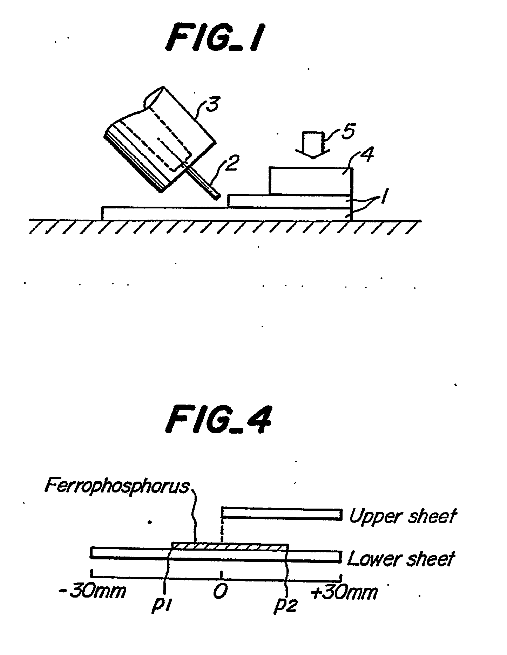

Then, the appropriate application position for the ferrophosphorus was examined using steel sheets of 2.6 mm in thickness which had been hot dipped with zinc on both sides (weight of hot dipped zinc: 45 g/m²/surface). These sheets were subjected to lap joint welding using a commercially available ferrophosphorus having a P content of 20–28% by weight as shown in Fig. 1. In Fig. 1, the zinc hot dipped steel sheets are denoted by reference numeral 1, numeral 2 is a welding wire, numeral 3 is a welding torch, numeral 4 is a pressure plate and numeral 5 represents a pressing force.

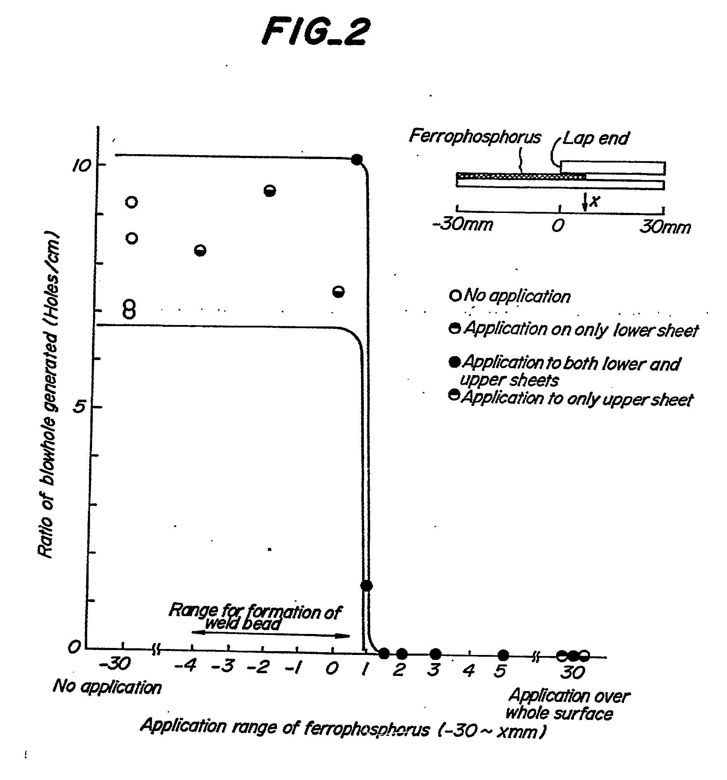

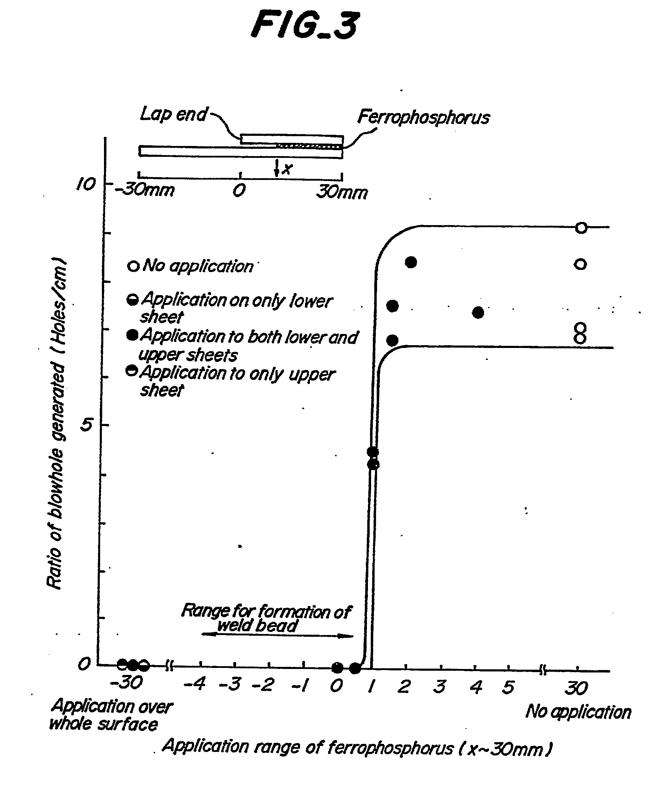

The results obtained are shown in Figs. 2 and 3. As can be seen from Figs. 2 and 3, when the ferrophosphorus is applied to at least one of the lapped surfaces at a position corresponding to a width of at least 0.5–1.5 mm measured from the lap end, the ratio of blowholes generated rapidly reduces. As a result of observations on the section of the welded joint after the formation of the weld bead, it has been found that the weld bead is formed with melting of the lapped surface up to 0.5 mm from the lap end.

That is, the effective application position of the ferrophosphorus is that region of at least one of the lapped surfaces which has a width of not less than 1.0 mm adjacent to the weld bead. If the application region does not satisfy the above requirement, the ratio of blowholes generated rapidly increases. In this experiment, the application amount of ferrophosphorus was 60 g/m².

Next, the effective and adequate amount of phosphorus compound to be applied was examined as follows.

That is, the ratio of blowholes generated was measured by changing the amount of ferrophosphorus applied to one side of the lapped surfaces including the aforementioned effective application region. As a result, when the application amount was less than 10 g/m², blowholes occur, while when it exceeds 1,000 g/m², although the effect of reducing the ratio of blowholes generated is observed, the weld bead becomes humped and thus the bead appearance is undesirably damaged.

Therefore, the effective application amount of the phosphorus compound is restricted to a range of 10–1,000 g/m².

Moreover, it has been confirmed from the experiments that it is better to make the application amount of the phosphorus compound larger within the above range as the weight of hot dipped zinc becomes larger.

As previously mentioned, the phosphorus compound is spread in the form of powder, or sprayed by a spray gun or applied by a brush in the form of suspension prior to the welding. In any case, no special problems occur during this application.

Moreover, the phosphorus compound may previously be adhered to the surface of the zinc coating, or be chemically or physically included in the zinc coating in the production of surface treated steel sheets.

The phosphorus compound may be selected by taking economic reasons and safety into account since blowholes can be reduced by using phosphorus compounds.

The following Examples are given to illustrate the invention and are not intended as limitations thereof.

Example 1

Lap joint welding as shown in Fig. 1 was carried out with respect to double sided zinc hot dipped steel sheets of 2.6 mm in thickness (weight of hot dipped zinc: 45 g/m²/surface) using a suspension of a blowhole or pit preventing agent having the following composition:

ferrophosphorus powder
(P content: 20% by weight,
average particle size $\leq 3$ μm) 53%
1,1,1-trichloroethane 46%
titanate binder 1%

The suspension was sprayed onto the surface of the lower steel sheet in an amount of 100 g/m² as a Freon based aerosol. Pulsed MAG welding was carried out using a commercially available wire for MAG welding (JIS–YGW 16, wire diameter: 1.2 mm) and a shielding gas of Ar+20% $CO_2$ under welding conditions of 220 A, 23 V and 120 cm/min.

The amount of blowholes or pits generated was observed by an X-ray test of the weld zone.

The results obtained are shown in the following Table 1, wherein the application position is represented by coordinates p1–p2 in Fig. 4.

The weld bead was formed over a range of –4.0~+0.5 mm.

## Table 1

| | Application position (p1~p2) | | Application width (mm) | Ratio of blowhole and pit generated (holes/cm) |
|---|---|---|---|---|
| Comparative Example | no application | | 0 | 8.3 |
| | –30.0(mm)~0.0(mm) | | 30 | 9.2 |
| | 2.0 | ~30.0 | 28 | 8.1 |
| | 1.5 | ~30.0 | 28.5 | 5.7 |
| | 1.0 | ~30.0 | 29 | 3.2 |
| Example | –30.0 | ~30.0 | 60 | 0.0 |
| | –5.0 | ~ 5.0 | 10 | 0.0 |
| | –1.5 | ~ 1.5 | 3 | 0.0 |
| | 0.0 | ~ 1.5 | 1.5 | 0.0 |
| | 0.5 | ~ 1.5 | 1 | 0.0 |
| | 0.5 | ~10.0 | 9.5 | 0.0 |
| | 0.5 | ~20.0 | 19.5 | 0.0 |
| | 0.5 | ~30.0 | 29.5 | 0.0 |

Example 2

Lap joint welding as shown in Fig. 1 was carried out with respect to doubled sided zinc alloy hot dipped steel sheets of 2.2 mm in thickness (weight of hot dipped zinc: 75 g/m²/surface) using a suspension of a preventing agent having the following composition:

ferrophosphorus powder
(P content: 28% by weight,
average particle size: 2 μm) 42%
isopropyl alcohol 56%
ethyl silicate binder 2%

Different amounts of the suspension were sprayed, in the form of a Freon based aerosol onto only the lapped surface of the upper steel sheet over a width of 10 mm extending from the lap end. Pulsed $CO_2$ gas shielded arc welding was carried out by using a commercially available wire for $CO_2$ gas shielded arc welding (JIS–YGW 12, wire diameter: 1.2 mm) under welding conditions of 200 A, 22 V and 100 cm/min.

The results obtained are shown in the following Table 2.

Table 2

| | Application amount of ferrophosphor (g/m²) | Ratio of blowhole and pit generated (holes/cm) | Bead appearance * |
|---|---|---|---|
| Comparative Example | 0 | 9.2 | × |
| | 2 | 9.8 | △ |
| | 5 | 4.7 | ○ |
| | 8 | 1.3 | ○ |
| Example | 10 | 0.0 | ○ |
| | 40 | 0.0 | ○ |
| | 80 | 0.0 | ○ |
| | 120 | 0.0 | ○ |
| | 200 | 0.0 | ○ |
| | 500 | 0.0 | ○ |
| | 1,000 | 0.0 | ○ |
| Comparative Example | 1,500 | 0.0 | ⊖ |
| | 2,000 | 0.0 | ⊖ |

* Bead appearance x : poor

(due to occurrence of pits)

△ : slightly poor

(due to occurrence of pits)

⊖ : slightly poor

(due to humped bead)

○ : good

As mentioned above, according to the invention, the occurrence of blowholes and pits, which constitute a serious defect in welded joints, can be completely prevented by applying a proper amount of the phosphorus compound to a given position on the galvanized sheet (see Fig. 5) prior to lap joint welding. Therefore, the invention is not only useful in the arc-welding of zinc plated sheets, steel sheets treated with a zinc rich primer, and the like, but is also applicable to industrial fields where zinc treated steel sheets cannot ordinarily be used for fear of generating blowholes and the like in the weld metal.

## Claims

1. A method of lap joint arc-welding a galvanized sheet which comprises applying a blowhole or pit preventing agent to at least one of the lapped surfaces to be welded and then performing arc-welding, said agent comprising at least one phosphorus compound of the general formula MxPy, wherein M is an element selected from the group consisting of Fe, Ni, Cu, Cr, Mo, Mn, Si and Al, and x and y are each integers, and being applied in an amount such that said phosphorus compound is present in an amount of from 10 to 1000g/m².

2. A method according to claim 1, wherein said agent consists of from 5 to 70% by weight of ferrophosphorus and from 0.1 to 20% by weight of an additive with the balance being a solvent.

3. A method according to claim 2, wherein said ferrophosphorus is at least one of $Fe_2P$, FeP, $Fe_3P$ and $FeP_2$ and has a phosphorus content of from 15 to 55% by weight.

4. A method according to claim 3, wherein said phosphorus content is from 20 to 28% by weight.

5. A method according to any one of claims 1 to 4, wherein said agent is applied over a region of at least 1 mm width adjacent to the position of the weld bead to be formed.

## Patentansprüche

1. Verfahren zum Überlappungsverbindungsbogenschweißen eines galvanisierten Bleches, welches aufweist:
Auftragen eines gasblasen- oder grübchenbildung-verhindernden Agens auf wenigstens eine der zu schweißenden überlappenden Oberflächen und anschließendes Ausführen des Schweißens, wobei das Agens zumindest eine Phosphorverbindung der allgemeinen Formel MxPy aufweist, bei welcher M ein aus der aus Fe, Ni, Co, Cr, Mo, Mn, Si und Al bestehenden Gruppe ausgewähltes Element ist und x und y jeweils ganz Zahlen sind, und in einer solchen Menge aufgetragen wird, daß die Phosphorverbindung in einer Menge von 10 bis 1000 g/m² vorliegt.

2. Verfahren nach Anspruch 1, dadurch gekennzeichnet, daß das Agens zu 5 bis 70 Gewichtsprozent aus Eisenphosphor und zu 0,1 bis 20 Gewichtsprozent aus einem Zusatzstoff besteht, mit Rest Lösungsmittel.

3. Verfahren nach Anspruch 2, dadurch gekennzeichnet, daß der Eisenphosphor zumindest einer von $Fe_2P$, FeP, $Fe_3P$ und $FeP_2$ ist und einen Phosphorgehalt von 15 bis 55 Gewichtsprozent aufweist.

4. Verfahren nach Anspruch 3, dadurch gekennzeichnet, daß der Phosphorgehalt zwischen 20 und 28 Gewichtsprozent beträgt.

5. Verfahren nach einem der Ansprüche 1 bis 4, dadurch gekennzeichnet, daß das Agens über einen Bereich von mindestens 1 mm Breite angrenzend an die Lage der zu bildenden Schweißnaht aufgetragen wird.

## Revendications

1. Procédé de soudage à l'arc de joint à recouvrement d'une tôle galvanisée qui comprend l'application d'un agent de prévention des bulles de gaz ou des piqûres à au moins l'une des surfaces en recouvrement à souder puis le soudage à l'arc, ledit agent comprenant au moins un composé du phosphore de formule générale MxPy dans laquelle M est un élément choisi dans le groupe formé par Fe, Ni, Cu, Cr, Mo, Mn, Si et Al, et x et y sont chacun des nombres entiers, et étant appliqué en une quantité telle que ledit composé du phosphore est présent en une quantité de 10 à 1000 g/m².

2. Procédé selon la revendication 1, dans lequel ledit agent consiste en 5 à 70% en poids de ferrophosphore et en 0,1 à 20% en poids d'au moins un additif, le complément étant un solvant.

3. Procédé selon la revendication 2, dans lequel ledit ferrophosphore est au moins l'un des composés $Fe_2P$, FeP, $Fe_3P$ et $FeP_2$ et a une teneur en phosphore de 15 à 55% en poids.

4. Procédé selon la revendication 3, dans lequel ladite teneur en phosphore est de 20 à 28% en poids.

5. Procédé selon l'une quelconque des revendications 1 à 4, dans lequel ledit agent est appliqué sur une région large d'au moins 1 mm adjacente à la position de la chenille de soudure à former.

# FIG_1

# FIG_4

Ferrophosphorus

Upper sheet

Lower sheet

-30mm    p1    0    p2    +30mm

# FIG_2

# FIG.3

Lap end      Ferrophosphorus

-30mm    0    30mm

10

Ratio of blowhole generated (Holes/cm)

○ No application

◑ Application on only lower sheet

● Application to both lower and upper sheets

◒ Application to only upper sheet

5

8

Range for formation of weld bead

0

-30   -4   -3   -2   -1   0   1   2   3   4   5    30

Application over whole surface                No application

Application range of ferrophosphorus ( x~30mm )

**FIG_5a**

**FIG_5b**

**FIG_5c**

**FIG_5d**

**FIG_5e**

**FIG_5f**